(19) **Europäisches Patentamt**

**European Patent Office**

**Office européen des brevets**

(11) **EP 0 987 489 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(51) Int Cl.$^7$: **F21V 8/00**

(21) Anmeldenummer: **99250322.7**

(22) Anmeldetag: **14.09.1999**

(54) **Hinweisleuchte**

Advisory sign,illuminated from rear

Signe indicatrice, illuminée par derrière

(84) Benannte Vertragsstaaten:
**AT BE CH CY DE DK ES FI FR GB GR IE IT LI LU MC NL PT SE**

(30) Priorität: **14.09.1998 DE 19841962**
**25.01.1999 DE 19902774**

(43) Veröffentlichungstag der Anmeldung:
**22.03.2000 Patentblatt 2000/12**

(73) Patentinhaber: **Dr.-Ing. Willing GmbH**
**96110 Schesslitz-Burgellern (DE)**

(72) Erfinder: **Willing, Achim**
**96110 Schesslitz-Doschendorf (DE)**

(74) Vertreter: **Pfenning, Meinig & Partner GbR**
**Joachimstaler Strasse 10-12**
**10719 Berlin (DE)**

(56) Entgegenhaltungen:
**EP-A- 0 403 764          EP-A- 0 617 394**
**WO-A-95/16983**

**Beschreibung**

Die Erfindung betrifft eine Hinweisleuchte mit einem Leuchtkörper, insbesondere eine Rettungszeichenleuchte nach dem Oberbegriff des Hauptanspruchs.

Aus dem Stand der Technik bekannte Hinweisleuchten bestehen aus einem Leuchtenkörper, der eine lichtabstrahlende Lichtaustrittsfläche aufweist, die in unterschiedlichen Farben abstrahlende Teilflächen aufgeteilt ist. Dabei sind die Teilflächen der einen Farbe beispielsweise durch Piktogrammelemente oder Hinweiselemente definiert, während die Teilflächen bzw. Teilfläche der anderen Farbe den Hintergrund bzw. die Umrahmung für die Hinweiselemente bildet. In den Leuchtkörper wird üblicherweise von mindestens einer Lichtquelle Licht eingestrahlt, das an den Begrenzungsflächen des Leuchtkörpers reflektiert wird und über die Lichtaustrittsfläche austritt. Der Leuchtkörper kann dabei aus einem oder mehreren transparenten, flachen, den Lichtleiteffekt ausnutzenden Lichtleitkörpern bestehen, in deren seitliche Kanten Licht eingespeist wird, und aus deren Oberfläche durch die Totalreflexion unterbrechende Maßnahmen Licht ausgelenkt wird. In einer anderen Ausführungsform des Standes der Technik besteht der Leuchtkörper aus einem flachen Hohlkörper mit transluzenten lichtabstrahlenden Abdeckungen nach mindestens einer Seite, oft auch nach den zwei gegenüber liegenden Seiten. In dem Hohlraum sind entweder Lampen und Reflektoren zur Hinterleuchtung der Hinweiselemente angeordnet oder in einer Lichttasche wird über mindestens eine Längsseite des Leuchtkörpers Licht eingestrahlt.

Aus der EP 0 403 764 ist eine beleuchtete Anzeigeeinheit bekannt, die zwei mit Abstand zueinander parallel angeordnete Lichtleitplatten mit Hinweiselementen aufweist, wobei die Anzeigeeinheit zwei Abstrahlflächen aufweist. Jede Lichtleitplatte wird von einer Leuchtdiodenanordnung beleuchtet, wobei die Leuchtdioden zur Erzielung von Farbeffekten farbig sein können.

WO 95/16983 beschreibt eine gattungsbildende Beleuchtungsvorrichtung, die einen Stapel von Lichtleitplatten umfasst. Die Lichtleitplatten tragen unterschiedliche Hinweiselemente und können mit unterschiedlich farbigen Leuchtdioden beleuchtet werden.

Entsprechend internationaler Norm sind die Hinweisleuchten üblicherweise durch eine grüne und eine weiße Abstrahlfläche gekennzeichnet. Nach dem Stand der Technik wird die Lichtfarbe der weiß abstrahlenden Flächenanteile aus der Lichtfarbe der Lichtquelle, beispielsweise Leuchtstofflampe, Glühlampe oder Leuchtdiode bzw. Leuchtdiodenkombination gewonnen, während die farbigen Anteile des Hinweiszeichens, also beispielsweise die grüne Farbe im Falle von Rettungszeichen, durch spektrale Filterung der weißen Lichtfarbe gewonnen wird. Der Lichtstrombedarf des Zeichens errechnet sich somit aus dem Lichtstrombedarf der weißen Fläche, weil diese nach dem Stand der Technik zur Hinterleuchtung der farbigen Flächenanteile genutzt wird.

Für Rettungszeichen wird entsprechend dem deutschen Standard DIN 4844 für den Netzbetrieb in heller Umgebung eine mittlere Leuchtdichte von 200 cd/m$^2$ der lichtabstrahlenden Piktogrammfläche gefordert, dies bei einem Weiß/Grün-Leuchtdichtekontrast >5:1 und einem grünen Flächenanteil von mindestens 50%. Bei einem üblichen Flächenanteil der weißen Farbe von 33% ergibt sich eine Leuchtdichte der weißen Fläche von 425 cd/m$^2$, um die Forderung nach einer mittleren Leuchtdichte von 200 cd/m$^2$ zu erfüllen.

Für eine einseitig abstrahlende Fläche von 150 mm x 300 mm ergibt sich nach dieser Rechnung bei diffuser Lichtabstrahlung aus den obigen Leuchtdichten ein Lichtstrombedarf der Lichtabstrahlung von 60 lm bei einer Leuchtdichte von 425 cd/m$^2$.

Unter den Bedingungen des Notbetriebes reduzieren sich die geforderten Leuchtdichten erheblich. So wird für die grün abstrahlenden Flächen eine Mindestleuchtdichte von 5 cd/m$^2$ gefordert. Wegen der Anforderung an den Leuchtdichtekontrast ergibt sich somit für die weißen Flächen eine Mindestleuchtdichte von 25 cd/m$^2$. Dies bedeutet umgerechnet, dass der für den Notbetrieb benötigte Lichtstrom um eine Faktor 19 gegenüber dem Netzbetrieb abgesenkt werden kann.

Um die Anforderungen beim Einsatz von Leuchtdioden als Lichtquelle, die üblicherweise eine sehr viel höhere Lebensdauer als Glühlampen und übliche Leuchtstofflampen aufweisen, zu erfüllen, müsste bei einer typischen Lichtausbeute von 10 lm/W eine elektrische Leistung in heller Umgebung von 20 bis 24 W installiert werden und bei Notbetrieb von 1 bis 1,2 W bezogen auf ein zweiseitig abstrahlendes Zeichen der Größe 150x300 mm. Dies ist einerseits ein nicht mehr wirtschaftlicher Energieaufwand, andererseits sind bei einer spezifischen Leistung von typisch 0,05 bis 0,1 W pro Leuchtdiode mehr als 300 Leuchtdioden nötig, um die Anforderungen zu erfüllen. Auch bei angestrebten 0,2 W pro Leuchtdiode sind noch immer 115 Leuchtdioden nötig. Dies führt zu unwirtschaftlich hohen Herstellkosten. Ähnliche Überlegungen gelten auch für andere Farbkombinationen.

Beim Einsatz herkömmlicher Leuchtmittel, insbesondere Leuchtstofflampen mit üblichen Durchmessern von 16 mm können wegen der hohen Lichtausbeuten schlechte Leuchtenwirkungsgrade in Kauf genommen werden. Beim Einsatz von Leuchtdioden spielt wiederum der Leuchtenwirkungsgrad für die Wirtschaftlichkeit eine wesentliche Rolle. Der Leuchtenwirkungsgrad eines bunt abstrahlenden Leuchtenkörpers ergibt sich einerseits aus den Verlusten bei der Erzeugung des bunten Lichtes, andererseits ergeben sich bei punktförmigen Lichtquellen, wie Leuchtdioden, weitere Verluste aus der Umwandlung der Lichtverteilungen in vollflächig abstrahlende Lichtaustrittsflächen.

Der Erfindung liegt daher die Aufgabe zugrunde, eine Hinweisleuchte mit einem Leuchtkörper, der mindestens eine Lichtaustrittsfläche aufweist, die in bunt bzw. farbig abstrahlende Teilflächen aufgeteilt ist, zu schaffen, bei der die gewünschten Leuchtdichten der lichtabstrahlenden Flächen mit einem gegenüber dem Stand der Technik deutlich reduzierten Leistungsbedarf hergestellt werden können und bei der der Kontrast zwischen den Teilflächen hoch ist.

Diese Aufgabe wird erfindungsgemäß durch die kennzeichnenden Merkmale des Hauptanspruchs in Verbindung mit den Merkmalen des Oberbegriffs gelöst.

Dadurch, dass der Leuchtkörper der Hinweisleuchte aus übereinander, nebeneinander und ineinander angeordneten, die unterschiedlichen Teilflächen aufweisenden Lichtleitplatten oder Hohlkörpern zusammengesetzt ist, und dass den Lichtleitplatten oder Hohlkörpern entsprechend den in unterschiedlichen Farben abstrahlenden Teilflächen unterschiedliche Lichtquellen zugeordnet sind, die unterschiedlich farbiges Licht in die jeweiligen Lichtleitplatten oder Hohlkörper einstrahlen, kann die Farberzeugung über die Filterung vermieden werden und die entsprechend höhere Lichtausbeute der farbigen Lichtquellen in Form einer oder mehrerer Leuchtdioden oder farbigen Leuchtstofflampen wirkt sich voll aus. Durch Vorsehen eines vor mindestens einer Teilfläche angeordneten Filters, das eine spektrale Transmission aufweist, die im Wellenlängenbereich der Lichtabstrahlung der zugeordneten Lichtquelle möglichst groß ist, und die bei Bestrahlung mit Fremdlicht einer anderen Farbe, beispielsweise weiß, die Farbe der einspeisenden Lichtquellen bzw. der abstrahlenden Fläche im Wesentlichen beibehält, wird ein großer Kontrast erreicht.

Durch die in den Unteransprüchen angegebenen Maßnahmen sind vorteilhafte Weiterbildungen und Verbesserungen möglich.

Es ist besonders vorteilhaft, dass die lichtabstrahlenden Flächen der Lichtquellen und die Lichteintrittsflächen der Begrenzungswände des Leuchtkörpers bzw. der Lichtleitplatten bzw. der Hohlkörper so aufeinander angepasst sind, dass im Wesentlichen das gesamte abgestrahlte Licht der Lichtquellen in den Leuchtkörper gelangt und dass die übrigen Begrenzungsflächen, die dem Inneren des Leuchtkörpers zugewandt sind, ein hohes Reflexionsvermögen aufweisen.

Ausführungsbeispiele der Erfindung sind in der Zeichnung dargestellt und werden in der nachfolgenden Beschreibung näher erläutert. Es zeigen

Fig. 1    das die Farbbereiche definierende Farbdreieck,

Fig. 2    Spektralkurven von bei der vorliegenden Erfindung verwendeten Lichtquellen und Filtern,

Fig. 3    ein erstes Ausführungsbeispiel der Hinweisleuchte nach der vorliegenden Erfindung,

Fig. 4    ein zweites Ausführungsbeispiel der erfindungsgemäßen Hinweisleuchte,

Fig. 5    eine Anordnung der Lichtquellen der Ausführungsbeispiele nach Fig. 3 und Fig. 4,

Fig. 6    eine Schnittansicht und eine Aufsicht auf eine Hinweisleuchte nach einem dritten Ausführungsbeispiel der vorliegenden Erfindung,

Fig. 7    eine Anordnung einer Lichtquelle für das Ausführungsbeispiel nach Fig. 6,

Fig. 8    eine Aufsicht und zwei Schnittansichten einer Hinweisleuchte nach einem vierten Ausführungsbeispiel der vorliegenden Erfindung, und

Fig. 9    eine Aufsicht und zwei Schnittdarstellungen nach einem fünften Ausführungsbeispiel der vorliegenden Erfindung, und

Fig. 10   eine Seitenansicht und eine Schnittansicht einer als farbiger Leuchtstreifen ausgebildeten Hinweisleuchte.

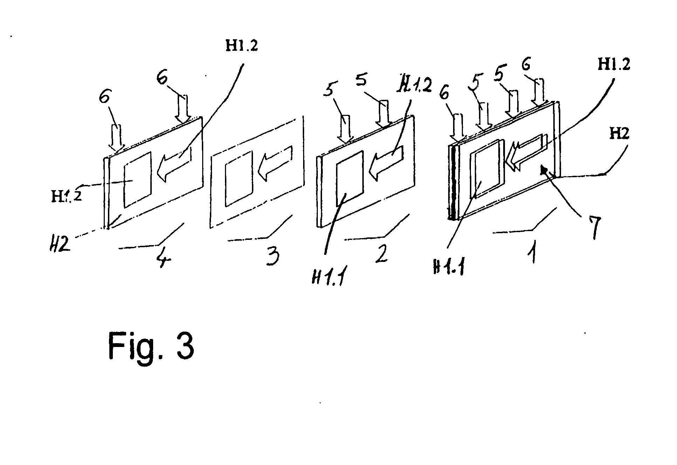

In Fig. 3 ist eine als Rettungszeichenleuchte ausgebildete Hinweisleuchte rechts dargestellt, während links die einzelnen Teile in auseinandergezogener Weise gezeigt sind. Die Leuchte 1 ist einseitig abstrahlend und besitzt eine in der Figur nach rechts weisende Lichtaustrittsfläche 7, die aus mehreren Teilflächen oder Hinweiselementen H1.1, H1.2 und H2 besteht. H1.1 und H1.2 bilden ein Rettungszeichen und strahlen in weißer Lichtfarbe ab, während das Hinweiselement H2, das die übrige Fläche einnimmt, in grüner Lichtfarbe abstrahlt. Die in Fig. 3 dargestellte Leuchte ist als Beispiel zu sehen, es können beliebige andere Formen und Farben und andere Hinweiselemente vorgesehen sein.

Die Leuchte 1 ist aus zwei Lichtleitkörpern 2 und 4 zusammengesetzt, wobei der Lichtleitkörper 2 die weiß abstrahlenden Hinweiselemente H1.1 und H1.2 und der Lichtleitkörper 4 das Hinweiselement H enthält. Zur Abstrahlung der weißen Hinweiselemente H.1 und H1.2 ist die Lichtleitplatte 2 in deren Bereich mit lichtauslenkenden Maßnahmen versehen, d.h. es sind Mittel vorgesehen, die die in der Lichtleitplatte stattfindende Totalreflexion unterbrechen, dies kann durch Aufrauhung, Rasterung, Bedruckung oder dergleichen geschehen. Im übrigen Bereich ist der Lichtleitkörper 2 durchsichtig ausgeführt. An den Kanten ist mindestens eine Lichtquelle 5 vorgesehen, die Licht in den Lichtleitkörper über Lichteintrittsflächen einstrahlt, wobei das einstrahlende Licht eine weiße Farbe aufweist. Die einstrahlende Lichtquelle kann als schmale Leuchtstofflampe ausgeführt sein, vorzugsweise sind jedoch mehrere Leuchtdioden vorgesehen, die in dem dargestellten Ausführungsbeispiel schematisch gezeigt sind und mit 5 bezeichnet sind. Die einzelnen Leuchtdioden 5 können weißes Licht abstrahlen, die weiße Lichtfarbe kann jedoch auch durch eine Kombination verschiedenfarbiger Leuchtdioden erzielt werden.

Der Lichtleitkörper 4 ist gleichfalls transluzent ausgebildet und die Hinweiselemente H1.1 und H1.2 sind ausgespart und die übrige lichtabstrahlende Fläche strahlt mit einer grünen Farbe ab. Dazu sind die Lichtquellen vorzugsweise als grüne Leuchtdioden 6 ausgebildet, die über die Kanten des Lichtleitkörpers 4 einstrahlen. Im Bereich des Hinweiselementes H2 ist wiederum die Totalreflexion durch entsprechende Maßnahmen unterbrochen. Die Rückseite der Lichtleitplatte 4 ist vorzugsweise mit einer reflektierenden Beschichtung versehen.

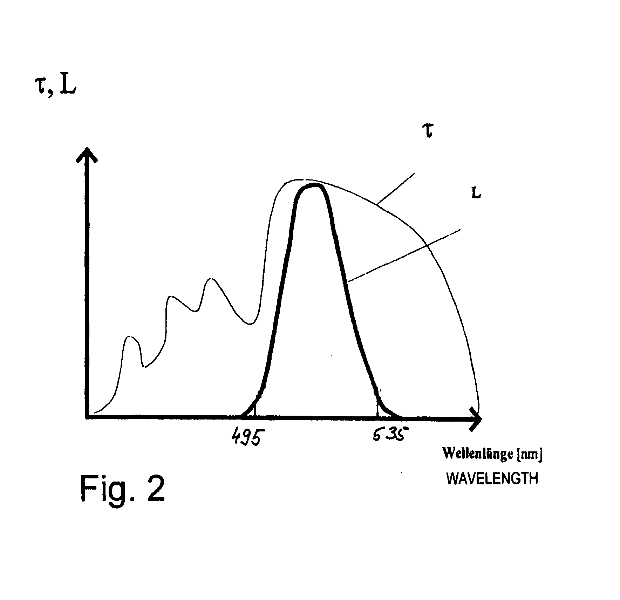

Zwischen den zwei Lichtleitkörpern 2, 4 ist im Ausführungsbeispiel ein Filter 3 angeordnet, das im Bereich des Hinweiselementes H2 eine spektrale Durchlässigkeit aufweist, die im spektralen Ausstrahlungsbereich der grünen Leuchtdioden 6 ein Maximum besitzt. Darüber hinaus soll das Filter, das als Folie, Beschichtung oder Platte ausgebildet sein kann, ein Reflexions- und Absorptionsvermögen derart aufweisen, daß auf das Filter 3 auftreffendes weißes Licht die grüne Farbe nicht verfälscht. Eine typische Durchlaßkurve T des Filters 3 in Zusammenhang mit einer spektralen Leuchtdichteverteilung L der grün abstrahlenden Leuchtdioden 6 sind in Fig. 2 dargestellt. Im zusammengesetzten Zustand entsprechend Fig. 3 hinterleuchtet die Lichtleitplatte 4 mit seiner grünen Fläche H2 den Lichtleitkörper 2, wobei zusätzlich das Filter 3 zu der grünen Farbe beiträgt. Auf die Leuchte von außen auftreffendes weißes Fremdlicht wird gleichfalls durch das Filter 3 im grünen Bereich zumindest teilweise reflektiert, so daß der Kontrast hoch ist.

In einem anderen, nicht dargestellten Ausführungsbeispiel, kann zur Fertigungsvereinfachung der gesamte Lichtleitkörper 4 grün lichtabstrahlend ausgeführt sein, d.h. keine Aussparung der Hinweiselemente H1.1 und H1.2 aufweisen. In diesem Fall ist die Rückseite, d.h. die der Lichtleitplatte 4 zugewandte Seite im Bereich der Hinweiselemente H1.1 und H1.2 so gestaltet, daß sie für rückseitig auf sie treffendes Licht undurchlässig ist.

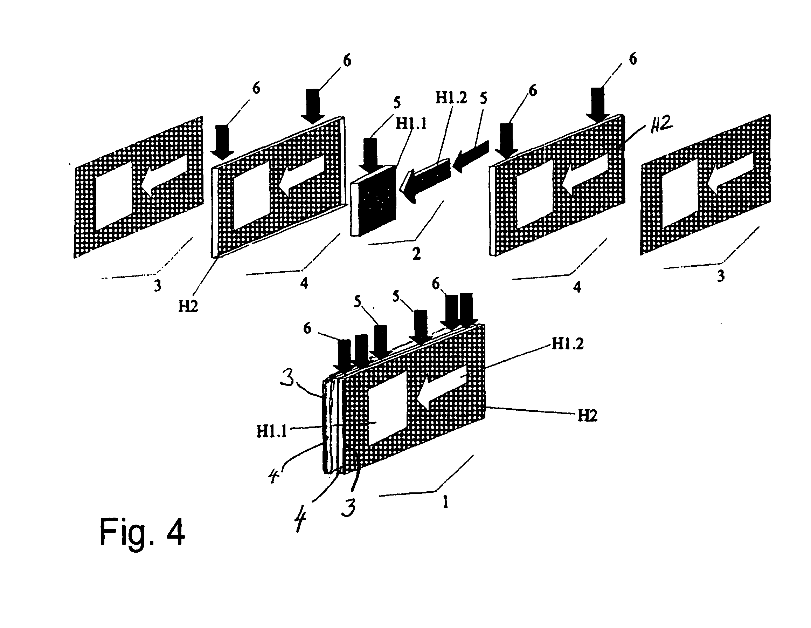

In Fig. 4 ist eine weitere Variante der Hinweisleuchte dargestellt, die in diesem Beispiel zweiseitig Licht abstrahlt. In diesem Beispiel sind zwei Lichtleitkörper 4 mit Aussparungen für die Hinweiselemente H1.1 und H1.2 vorgesehen, in die Leuchtdioden 6 mit grüner Farbe einstrahlen. Im Gegensatz zu dem Ausführungsbeispiel nach Fig. 3 ist jeweils ein Filter 3 vor den lichtabstrahlenden Flächen der Lichtleitkörper 4 angeordnet, wie im oberen Bereich der Fig. 4 in der Explosionsdarstellung zu sehen. Die Hinweiselemente H1.1 und H1.2 sind im dargestellten Fall einzeln als Lichtleitkörper 2 ausgeführt, selbstverständlich können sie in einer gemeinsamen Lichtleitplatte realisiert sein. In diesem Fall ergibt sich zwischen den äußeren Lichtleitkörpern 4 ein Zwischenraum, der durch die Dicke der Lichtleitkörper 2 bestimmt ist, und in dem die einspeisenden weißen Leuchtdichten 5 untergebracht werden können. Die Kontur der Lichtleitkörper 2 muß wegen der Abdekkung durch die nachfolgenden Lichtleitkörper 4 nicht exakt den graphischen Anforderungen folgen. Die Kanten sind ebenso wie in den vorgehenden Ausführungsbeispielen bis auf die Lichteintrittsflächen reflektierend ausgebildet.

Die Lichtleitkörper sind mit ihrem Material so auszuwählen, daß es möglichst geringe Absorptionsverluste besitzt, wie z.B. PMMA, da sich Absorptionsverluste wegen der Vielfachreflexionen, die sich im Inneren der Lichtleitplatten abspielen, auswirken. Das nichttransmittierte Licht wird im Inneren reflektiert, gemischt und erneut der Prozedur von Transmission und Reflexion an den Grenzschichten unterworfen. Im Falle einer einseitigen Lichtabstrahlung ist die rückseitige Fläche des Lichtleitkörpers vorzugsweise diffus reflektierend, beispielsweise mit einem Reflexionsgrad >97%. Dieser Reflexionsgrad kann durch entsprechend dichtes Material verwirklicht werden, das beispielsweise auf die Lichtleitplatte aufgebracht wird.

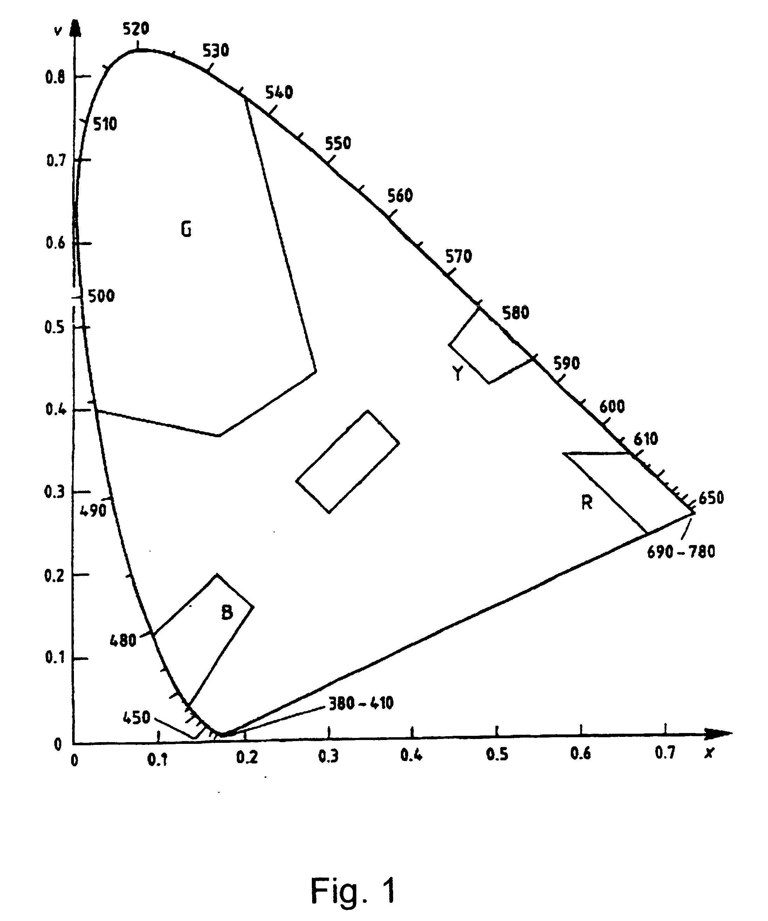

Im Folgenden soll kurz erläuternd auf die Problematik hinsichtlich von grün abstrahlenden Flächen eingegangen werden. Um bei Fremdlichteinfall die grüne Sicherheitsfarbe der oben erwähnten Leuchten zu erhalten, wird die Lichtaustrittsfläche der Leuchtenkomponente mit einem grünen Filter abgedeckt. In Fig. 1 ist in dem Farbdreieck der typische Farbbereich der grünen Sicherheitsfarbe gezeigt, wobei der gewünschte Farbort sowohl durch spektrales Licht der Wellenlängen 495 bis 535 nm, also mit dem spektralen Schwerpunktbereich grüner Leuchtdioden, als auch durch eine additive Mischung einer Vielzahl von unterschiedlichen Wellenlängen erzeugt werden kann. Bei den Sicherheitsleuchten nach dem Stand der Technik wird ein grünes Filter verwendet, dessen spektrale Durchlässigkeit so eingestellt ist, daß bei der üblichen gemeinsamen Hinterleuchtung der weißen und grünen Flächen sich ein vorgegebener Leuchtdichtekontrast von 5:1 einstellt. Diese Filter besitzen im Wellenlängenbereich der grünen Leuchtdioden 6 geringe Durchlässigkeit. Nachdem jedoch bei dem vorliegenden Erfindungskonzept die Leuchtdichten der grünen Flächen getrennt von der anderen weißen leuchtenden Fläche eingestellt werden kann, ist nunmehr jeder mögliche vorgegebene Kontrast einstellbar. Somit ist es möglich, Filter zur Abdeckung der grünen Lichtaustrittsflächen auszuwählen, deren spektrale Durchlässigkeit im Bereich der lichtabstrahlenden Wellenlängen der Leuchtdioden größere Durchlässigkeiten besitzen, ohne daß die gewünschten Leuchtdichtekontraste zu benachbarten Teilflächen verloren gehen, und ohne daß bei Fremdlichteinstrahlung durch weißes Licht der grüne Farbeindruck verloren geht. Typische erreichbare Transmissionen in diesem Bereich liegen bei ca. 80% und mehr.

Im Folgenden wird ein kurzes Berechnungsbeispiel angegeben, das die Effektivität der Erfindung zeigt.

Bezogen auf den Lichtstrombedarf der weißen Fläche bei Sicherheitsleuchten von 60 lm zur Erzeugung der gewünschten Leuchtdichten gemäß dem im obigen Stand der Technik beschriebenen Beispiels in herkömmlicher Technik, ergeben sich nunmehr folgende Werte:

Die Leuchtdichte der weißen Fläche soll 425 $Cd/m^2$ betragen, die Leuchtdichte der grünen Fläche beträgt somit 425/5 (Kontrast 5:1), nämlich 85 $Cd/m^2$. Bei einem Flächenanteil der weißen Farbe von 33% und einer Größe des Hinweiszeichens von 150 mm x 300 mm ergibt sich somit für die diffuse Abstrahlung gemäß der Formel: Lichtstrom [lm] = Leuchtdichte $[Cd/m^2]$xFläche $[m^2]$x$\Pi$ [sr]

$$\phi\text{weiß} = 425\text{x}0, 33\text{x}0, 15\text{x}0, 3\text{x}3, 14 = 20 \text{ lm}$$

$$\phi\text{grün} = 85\text{x}0, 67\text{x}0, 15\text{x}0, 3\text{x}3, 14/\tau,$$

wobei sich mit $\tau$ = 0,8 ein Lichtstrombedarf von $\phi$grün = 10 lm ergibt. Somit ist $\phi$ gesamt = 30 lm. Der abgestrahlte Lichtstrom der Rettungszeichenleuchte ist somit bei dem gewählten typischen Beispiel aufgrund der erfinderischen Gestaltung auf ca. 50% reduziert. Bei einer Lichtausbeute von 10 lm/W kann bei Anwendung des erfinderischen Prinzips bei Leuchtenwirkungsgraden von 50% und zweiseitiger Lichtabstrahlung ein Rettungszeichen der Größe 150 mm x 300 mm mit einer Leistung der Leuchtdioden von 12 W für Leuchtdichten in heller Umgebung und von 12x25/425 = 0,7 W im Falle des Notbetriebs verwirklicht werden. Die oben beschriebenen Beispiele beziehen sich auf Leuchten mit grüner und weißer Abstrahlfläche, selbstverständlich gilt das Prinzip der Erfindung auch für andersfarbige abstrahlende Flächen.

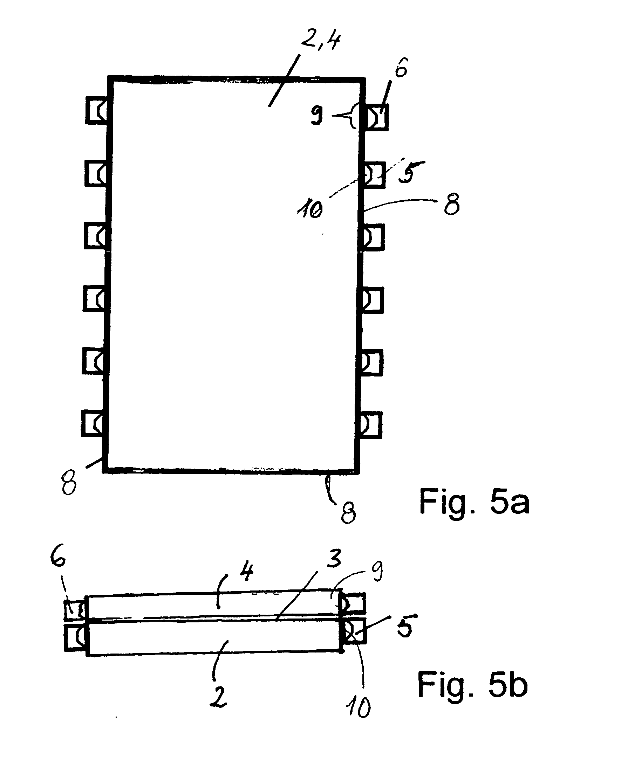

In Fig. 5a und 5b ist beispielhaft die Lichteinstrahlung in die Lichtleitplatten 2,4 entsprechend den vorhergehenden Beispielen dargestellt. Die Kanten 8 der Lichtleitplatten 4 sind hochreflektierend ausgebildet, beispielsweise diffus oder spiegelnd beschichtet. Ausgenommen von dieser Beschichtung sind die Lichteintrittsflächen 9 für die Leuchtdioden 5, 6, die mit ihrer abstrahlenden Fläche 10 direkt auf der Lichteintrittsfläche 9 sitzen, so daß das gesamte aus den Leuchtdioden 5, 6 austretende Licht in die Lichtleitplatten 2, 4 gelangt. Die Leuchtdioden können mit lichtlenkenden Optiken versehen sein. Vorzugsweise sind die Leuchtdioden als SMT-Leuchtdioden ausgebildet, die eine ebene Lichtaustrittsfläche aufweisen. Anstelle der dargestellten einzelnen Leuchtdioden 5, 6 können auch langgestreckte Leuchtstofflampen mit kleinen Durchmessern und lichtlenkenden Optiken bzw. Reflektoren über den Kanten 8 der Lichtleitplatten 5, 6 angeordnet sein.

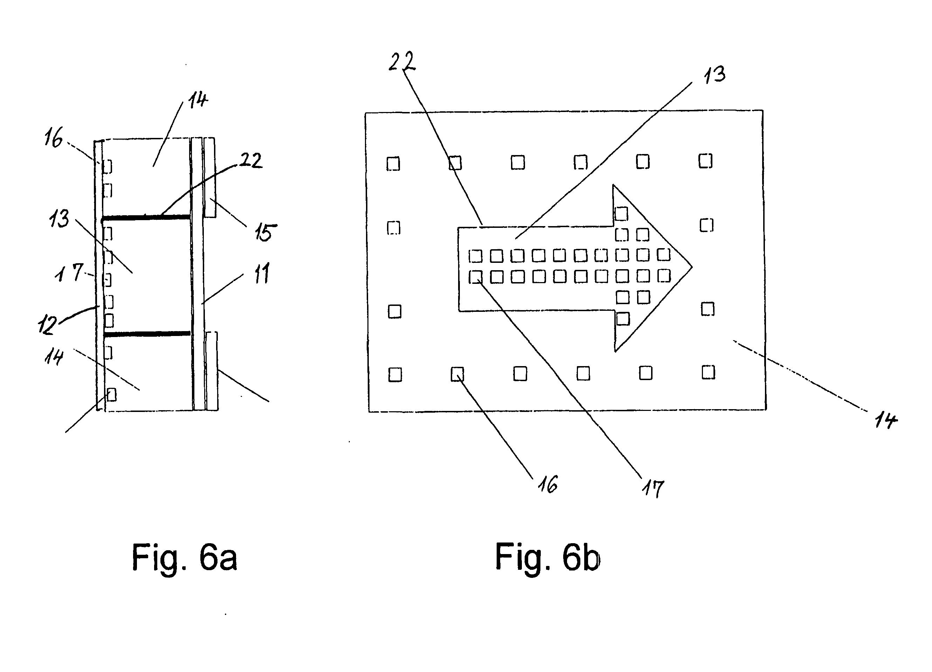

In Fig. 6a und 6b ist eine Hinweisleuchte im Schnitt und in der Draufsicht dargestellt. Auch hier soll die Leuchte anhand von Hinweiselementen in grüner und weißer Farbe beschrieben werden. Jedes Hinweiselement ist als Hohlkammer bzw. Hohlkörper ausgebildet, die bei einer einseitig abstrahlenden Leuchte eine lichtabstrahlende Fläche und eine Rückwand sowie Seitenwände aufweisen.

Im dargestellten Fall sind zwei ineinander geschachtelte Hohlkammern oder Hohlkörper 13, 14 vorgesehen, die eine gemeinsame transluzente Abdeckscheibe 11 und eine gemeinsame Rückwand 12 aufweisen. Das eine Hinweiselement besteht aus einem Pfeil, der durch den Hohlkörper bzw. durch die Hohlkammer 13 gebildet wird. Der Hohlkörper 13 ist in einem Hohlkörper 14 für das den Pfeil umgebende Hinweiselement aufgenommen, wobei die Kammern oder Körper 13, 14 durch die Trennwände 22, die gleichzeitig die Seitenwände des Hohlkörpers 13 für den Pfeil und ein Teil der Seitenwände des Hohlkörpers 14 bilden, optisch getrennt sind. Der Pfeil strahlt wiederum in weißem Licht ab, während die umgebende Fläche grün ist. Die Lichtaustrittsfläche für den weißen Pfeil wird über die transluzente Abdeckung 11 geliefert, während vor der Hohlkammer 14 für das grüne Hinweiselement ein Filter 15 vorgeschaltet ist, das die Form des Pfeils ausnimmt und das wiederum eine Transmissionskurve entsprechend Fig. 2 und ein Absorptions- und Reflexionsvermögen derart aufweist, daß bei weißem Fremdlicht der Kontrast zwischen grüner und weißer Abstrahlfläche beibehalten wird.

Auf der der Abdeckung 11 jeweils gegenüber liegende Fläche sind auf bzw. in der Rückwand 12 im Bereich des Hohlkörpers 14 grüne Leuchtdioden 16 und im Bereich des Hohlkörpers 13 weiße Leuchtdioden 17 angeordnet, wobei anstelle der weißen Leuchtdioden jedoch auch verschiedenfarbige Leuchtdioden vorgesehen sein können, die in ihrer Mischung ein weißes Licht ergeben. Im Bereich der Kammer bzw. des Hohlkörpers 13 für das weiße Hinweiselement sind die Leuchtdioden 17 dichter angeordnet, weil dort die zu erzielenden Leuchtdichten auf der Lichtabstrahlfläche größer sind.

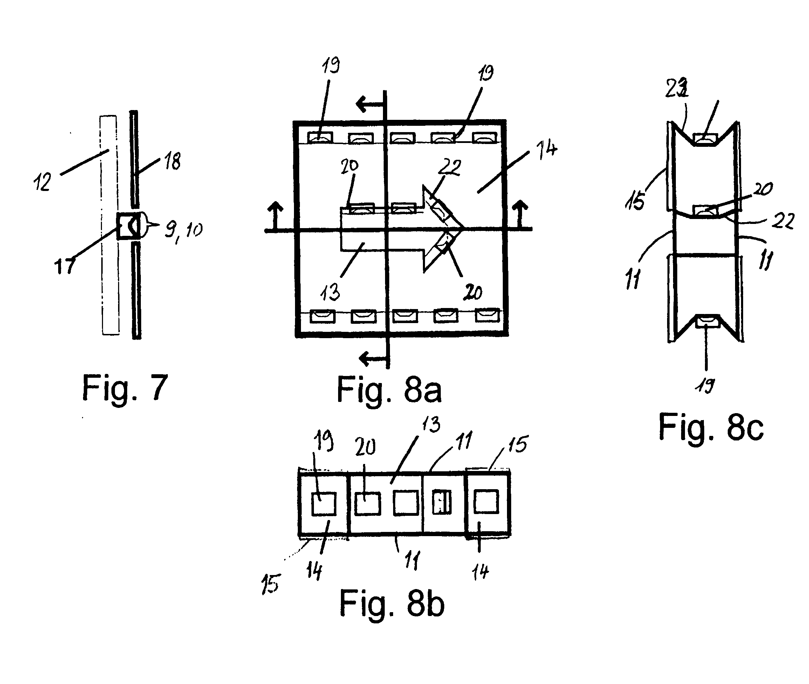

Vorzugsweise ist die Rückwand 12 als Platine ausgebildet, die auch die Leiterbahnen und gegebenenfalls Bauelemente zum Betrieb der Leuchtdioden 16, 17 trägt. In Fig. 7 ist der Aufbau der Rückwand 12, die gleichzeitig als Platine ausgebildet sein kann, genauer dargestellt, wobei eine als SMT-Leuchtdiode 17 ausgebildete Lichtquelle auf die Platine aufgesetzt ist. Die Lichteintrittsfläche 9 der Leuchtdiode 17 ragt in die Kammer 13 hinein, wobei in diesem Ausführungsbeispiel eine reflektierende Folie, Beschichtung oder Scheibe 18, die dem Inneren des von den Hohlkammern gebildeten Leuchtkörpers zugewandt ist, auf die Rückwand 12 aufgebracht ist.

In dem in Fig. 6 dargestellten Ausführungsbeispiel weisen die die lichtabstrahlenden Flächen für die jeweiligen Hinweiselemente vorgesehenen Hohlkörper 13, 14 eine gemeinsame Abdeckscheibe 11 und eine gemeinsame Rückwand 12 auf. Die Leuchte kann jedoch auch modulartig aufgebaut sein, wobei die Module die einzelnen Hinweiselemente bilden oder auch Teile von mehreren Hinweiselementen enthalten. Die Module können nebeneinander angeordnet sein, und zusätzlich von einer gemeinsamen Abdeckscheibe übergriffen werden.

Die Leuchte nach Fig. 6 ist eine einseitig abstrahlende Leuchte, wobei bei Anordnung von zwei solcher Leuchten Rücken an Rücken ein zweiseitig lichtabstrahlender Leuchtkörper realisiert werden kann. Es kann aber auch eine Platine vorgesehen sein, die zweiseitig bestückt ist. Besonders interessant ist diese Technik, wenn die Platinen sich über mehrere Leuchtkörper erstrecken, deren lichtabstrahlende Fläche gemeinsam ein Symbol darstellen. Die Leuchtkörper können dann als Kammern realisiert werden, wenn die optische Trennung untereinander durch Zwischenwände auf den Konturen der Teilflächen vorgenommen wird. Auf der gleichen Platine als Träger können dann in den unterschiedlichen Kammern Leuchtdioden mit den der Lichtabstrahlung entsprechenden Lichtfarben angeordnet werden. Die Zwischenwände können beispielsweise aus extrudierten Profilen aus gut reflektierendem Material hergestellt sein.

Die Lichtabstrahlfläche der Leuchte muß nicht plan und viereckig sein, sie kann sich nach außen oder nach innen wölben und z.B. oval oder rund sein. In gleicher Weise können auch die Seitenflächen, die ebenfalls als Lichtaustrittsflächen ausgebildet sein können, nach innen oder nach außen gewölbt werden. Weiterhin können im Inneren der jeweiligen Hohlräume oder Hohlkammern scheibenförmige Lichtleitelemente vorgesehen werden, mit entsprechenden Maßnahmen zur Auslenkung des Lichts, in die zumindest teilweise das Licht aus den Lichteintrittsflächen eingespeist wird. Derartige Lichtleitelemente können zur Verbesserung der Gleichmäßigkeit der Lichtabstrahlung nützlich sein. Auch kann die gesamte Kammer bzw. ihr Innenraum mit einem dichter brechenden Medium gefüllt sein, das klar transparent oder volumenstreuend, z.B. vorwärtsstreuend, ausgebildet sein kann, jedoch gilt die Bedingung, daß Absorptionsverluste sehr klein sein müssen. Dies ist beispielsweise bei PMMA der Fall. Ansonsten gilt hinsichtlich Material und Eigenschaften das, was in Zusammenhang mit den vorhergehenden Ausführungsbeispielen gesagt wurde.

In Fig. 8 ist ein weiteres Ausführungsbeispiel einer Hinweisleuchte mit Hohlkörpern bzw. Hohlkammern dargestellt, wobei Fig. 8a die Draufsicht und Fign. 8b und 8c Schnittansichten zeigen. Diese Leuchte kann sowohl als einseitig abstrahlende Leuchte als auch nach zwei Seiten abstrahlende Leuchte verwendet werden. Im ersteren Fall ist die Rückwand reflektierend ausgebildet und im zweiten Fall ist beidseitig eines transluzente Abdeckscheibe 11 vorgesehen, wobei entsprechend Fig. 6 der Hohlkörper bzw. die Kammer 14 (grüne Farbe) mit den spektralen Filtern 15 abgedeckt ist.

Wie in Fig. 8c zu erkennen ist, sind zumindest die oberen und unteren Seitenflächen bzw. Begrenzungswände der Hohlkörper 13 und 14 nach innen eingezogen, wobei die den Kammern 14 und 13 zugeordneten Leuchtdioden 19 und 20 in den Vertiefungen der Seitenwände 22, 23 untergebracht sind und vorzugsweise als SMT-Leuchtdioden ausgebildet sind. Die Seitenwände 23 der Kammer 14 sind bis auf die Lichteintrittsflächen für die Leuchtdioden nach innen reflektierend ausgebildet, während die Seitenwände 22 der Kammer 13 bis auf die Lichteintrittsflächen sowohl nach innen als auch nach außen reflektierend ausgebildet sind. Die Anzahl der notwendigen Leuchtdioden wird durch die verlangte Leuchtdichte, den Kontrast und die Gleichmäßigkeit der Lichtabstrahlung vorgegeben.

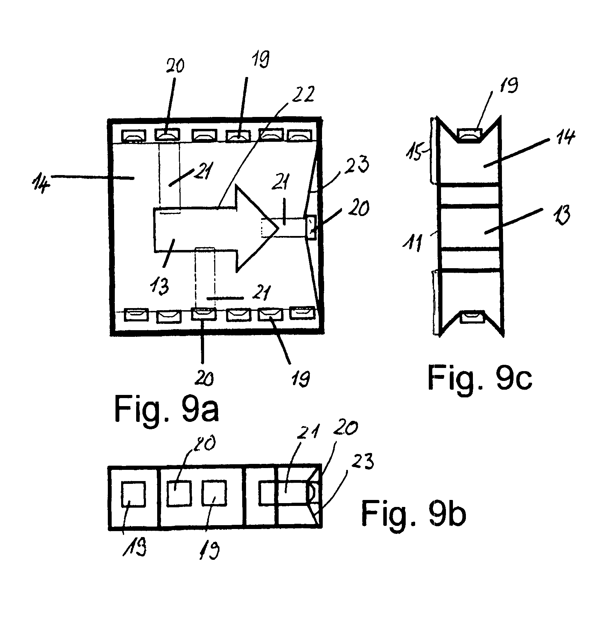

In Fig. 9 ist eine der Fig. 8 entsprechende Leuchte dargestellt, bei der jedoch die Lichteinstrahlung in den inneren, pfeilförmigen Hohlkörper 13 über Lichtleiter 21 geführt wird. Die Lichtleiter 21 sind einerseits mit den Leuchtdioden 20 für weißes Licht verbunden und andererseits durchgreifen sie die Begrenzungs- oder Trennwand 22 des pfeilförmigen Hohlkörpers 13. In dem dargestellten Ausführungsbeispiel Fig. 9a, Fig. 9b ist zu erkennen, daß zumindest eine der seitlichen Seitenwände 23 des äußeren Hohlkörpers 14 nach innen eingezogen ist, wobei wiederum die Leuchtdiode 20 in der gebildeten Vertiefung angeordnet ist.

Selbstverständlich können auch in den anderen Ausführungsbeispielen die Leuchtdioden an Lichtleiter angekoppelt sein, deren lichtabstrahlende Fläche die jeweiligen Teile des Leuchtenkörpers beleuchten.

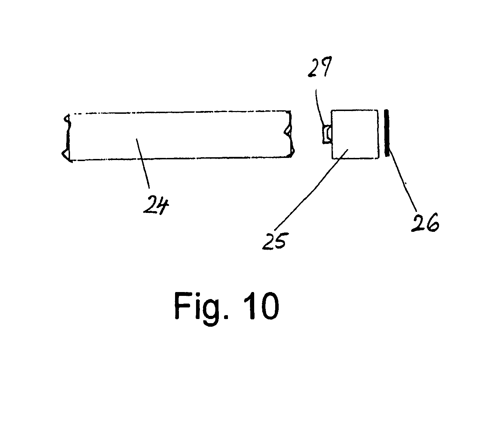

Einen Sonderfall der Hinweisleuchten stellt die Hinweisleuchte nach Fig. 10 dar. Hier ist nur ein Hinweiselement vorgesehen, nämlich ein Leuchtstreifen 25, der als Leitlinie dient und der vollflächig abstrahlen soll. Insbesondere für die vollflächige Lichtabstrahlung sind diese Streifen lichtstreuend und transluzent ausgebildet, wobei zur Vermeidung der Fremdlichteinstrahlung durch weißes Licht von außen, durch den der grüne Farbeindruck verweißlicht würde, ein spezielles Filter 26 vor dem Streifen 25 angeordnet ist, dessen spektrale Durchlaßkurve an die Spektralkurve der grünes Licht abstrahlenden Leuchtdioden 27 angepaßt ist. Wie schon bemerkt, können auch andere Farben für die Lichtabstrahlung vorgesehen werden.

**Patentansprüche**

1. Hinweisleuchte mit einem Leuchtkörper, der mindestens eine lichtabstrahlende Lichtaustrittsfläche aufweist, die in in unterschiedlichen Farben abstrahlende Teilflächen aufgeteilt ist, und mit einer Licht in den Leuchtkörper einstrahlenden Lichtquellenanordnung, wobei der Leuchtkörper eine Lichtleitplattenanordnung oder eine Hohlkörperanordnung mit Begrenzungswänden aufweist, wobei der Leuchtkörper aus übereinander, nebeneinander und/oder ineinander angeordneten, die unterschiedlichen Teilflächen aufweisenden Lichtleitplatten (2, 4) oder Hohlkörpern (13, 14) zusammengesetzt ist, und dass den Lichtleitplatten oder Hohlkörpern, entsprechend den in unterschiedlichen Farben abstrahlenden Teilflächen, unterschiedliche Lichtquellen (5, 6, 16, 17) zugeordnet sind, die unterschiedlich farbiges Licht in die jeweiligen Lichtleitplatten oder Hohlkörper einstrahlen,
**dadurch gekennzeichnet,**
**dass** vor mindestens einer Teilfläche der Lichtaustrittsfläche ein Filter (3, 15) angeordnet ist, dessen spektrale Transmissionskurve im Wellenlängenbereich der Lichtabstrahlung der zugeordneten Lichtquelle ein Maximum besitzt und im Übrigen ein solches Reflexions- und Absorptionsverhalten aufweist, dass bei einer Fremdlichteinstrahlung mit weißem Licht der Farbbereich des abgestrahlten Lichtes erhalten bleibt.

2. Hinweisleuchte nach Anspruch 1, **dadurch gekennzeichnet, dass** die Lichtaustrittsfläche in Teilflächen (H1.1, H1.2, H2) mit einer ersten Farbe und einer zweiten Farbe aufgeteilt ist, wobei der Leuchtkörper mindestens zwei übereinander angeordnete Lichtleitplatten (2, 4) aufweist, die jeweils mit unterschiedlich farbigen Lichtquellen (5, 6) bestrahlt werden, wobei in der Lichtleitplatte (4) der Teilfläche der ersten Farbe die Teilfläche der zweiten Farbe ausgenommen ist, und in der Lichtleitplatte (2) der Teilfläche der zweiten Farbe die Teilfläche der ersten Farbe ausgenommen oder transparent ist, oder wobei die Lichtleitplatte (4) der Teilfläche der ersten Farbe durchgehend abstrahlt und die Lichtleitplatte (2) der Teilfläche der zweiten Farbe im Bereich der Teilfläche der zweiten Farbe nach einer Seite lichtundurchlässig ist.

3. Hinweisleuchte nach Anspruch 1, **dadurch gekennzeichnet, dass** der jeweilige Hohlkörper (13, 14) von einer transluzenten Abdeckung (11), Seitenwänden (22) und einer der transluzenten Abdeckung gegenüberliegende Wand begrenzt ist, und dass die lichtabstrahlende Fläche des jeweiligen Hohlkörpers die Kontur der jeweiligen Teilfläche aufweist.

4. Hinweisleuchte nach Anspruch 3, **dadurch gekennzeichnet, dass** die Hohlkörper zumindest teilweise gemeinsame Begrenzungswände aufweisen.

5. Hinweisleuchte nach einem der Ansprüche 1 bis 4, **dadurch gekennzeichnet, dass** die nicht als Lichtaustrittsfläche des Leuchtkörpers, der Lichtleitplatten (2, 4) und/oder der Hohlkörper (13, 14) dienenden Begrenzungsflächen zumindest teilweise mit Lichteintrittsflächen für die aus den Lichtquellen (5, 6, 16, 17, 20, 21) austretende Strahlung versehen sind und ansonsten ein hohes Reflexionsvermögen für aus dem Leuchtenkörper auf sie treffendes Licht aufweisen, und dass die lichtabstrahlenden Flächen der Lichtquellen und die Lichteintrittsflächen der Begrenzungswände so aufeinander angepasst sind, dass im Wesentlichen das gesamte abgestrahlte Licht in den Leuchtkörper gelangt.

6. Hinweisleuchte nach einem der Ansprüche 1 bis 5, **dadurch gekennzeichnet, dass** die Lichtquellen als eine Mehrzahl von Leuchtdioden und/oder röhrenförmige Leuchtstofflampen, vorzugsweise mit kleinem Durchmesser ausgebildet sind.

7. Hinweisleuchte nach einem der Ansprüche 1 bis 6, **dadurch gekennzeichnet, dass** die Lichtaustrittsfläche des Leuchtkörpers aus mindestens einer in grüner Farbe abstrahlenden Teilfläche und mindestens einer in weißer Farbe oder einer Kontrastfarbe abstrahlenden Teilfläche besteht, die zusammenhängend ein Rettungszeichen darstellen, und dass die grünes Licht in den Leuchtkörper einstrahlende Lichtquelle vorzugsweise einen Schwerpunktswellenlängenbereich zwischen 595 und 535 mm aufweist.

8. Hinweisleuchte nach einem der Ansprüche 1 bis 6, **dadurch gekennzeichnet, dass** die unterschiedlich farbiges Licht abstrahlenden Lichtleitplatten oder Hohlkörper optisch voneinander getrennt sind.

9. Hinweisleuchte nach einem der Ansprüche 1 bis 8, **dadurch gekennzeichnet, dass** an dem Leuchtkörper mindestens ein die Lichtquellen tragender Träger (12) vorgesehen ist, der vorzugsweise die elektrischen Zuführungen zur Versorgung der Lichtquellen enthält und der mindestens eine Begrenzungswand des Leuchtkörpers bildet oder an der die Lichteintrittsflächen aufweisenden Begrenzungsfläche angeordnet ist.

**Claims**

1. Indicator lamp comprising a luminous body with at least one light emitting light outlet surface which is divided into sections which emit light in different colours and with a light source arrangement which beams light into the luminous body, and the luminous body comprises a light ducting plate arrangement or a hollow body arrangement with defining walls; and
the luminous body is composed of light ducting plates (2, 4) or hollow bodies (13, 14) arranged on top of or alongside one another and/or inside one another and comprising the different sectional surfaces, and different light sources (5, 6, 16, 17) are associated with the light ducting plates or hollow bodies corresponding with the sectional surfaces which emit light in different colours and which beam light of different colours into the respective light ducting plates or hollow bodies, **characterised in that** in front of at least one sectional surface of the light emitting surface is arranged a filter (3, 15) the spectral transmission curve of which has in the wavelength range of light emission of the associated light source a maximum, and apart thereof has a reflection and absorption behaviour so that the colour range of emitted light is maintained during intake of alien white light radiation.

2. Indicator lamp according to Claim 1, **characterised in that** the light outlet surface is divided into sectional surfaces (H1.1, H1.2, H2) with a first colour and a second colour, and the luminous body comprises at least two light ducting plates (2, 4) arranged on top of one another and respectively radiated with light sources (4, 5) of different colours, and in the light ducting plate (4) of the sectional surface of the first colour the sectional surface of the second colour is excepted, and in the light ducting plate (2) of the sectional surface of the second colour the sectional surface of the first colour is excepted or transparent, or the light ducting plate (4) of the sectional surface of the first colour is continuously radiated and the light ducting plate (2) of the sectional surface of the second colour is light-impermeable towards one side in the area of the sectional surface of the second colour.

3. Indicator lamp according to Claim 1, **characterised in that** the respective hollow body (13, 14) is defined by a translucent cover (11), sidewalls (22) and a wall located opposite the translucent cover, and the light emitting surface of a respective hollow body has the contour of a respective sectional surface.

4. Indicator lamp according to Claim 3, **characterised in that** the hollow bodies have at least partially communal defining walls.

5. Indicator lamp according to one of Claims 1 to 4, **characterised in that** the defining walls which do not serve as light emitting surface of the luminous body, the light ducting plates (2, 4) and/or the hollow bodies (13, 14) are at least partially provided with light intake surfaces for radiation exiting from the light sources (5, 6, 16, 17, 20, 21) and otherwise have a high reflection capability for light emitted from the luminous body, and the light emitting surfaces of the light surfaces and the light intake surfaces of the defining walls are matched in such a manner that essentially the entire radiated light arrives in the luminous body.

6. Indicator lamp according to one of Claims 1 to 5, **characterised in that** the light sources are designed as a plurality of light emitting diodes and/or tubular luminous lamps, preferably of small diameter.

7. Indicator lamp according to one of Claims 1 to 6, **characterised in that** the light emitting surface of the luminous body is composed of at least one sectional surface emitting in green colour and at least one sectional surface emitting in white colour or in a contrast colour which combined represent a rescue symbol, and the light source which beams green light into the luminous body preferably has a threshold wavelength range between 595 and 535 mm.

8. Indicator lamp according to one of Claims 1 to 6, **characterised in that** the light ducting plate or hollow bodies which emit light of different colours are optically separated from one another.

9. Indicator lamp according to one of Claims 1 to 8, **characterised in that** on the luminous body is provided at least one support (12) which supports the light sources and which preferably includes electric feeds for supplying the light sources and which either establishes at least one defining wall of the luminous body or is arranged on the defining surface which is provided with light intake surfaces.

## Revendications

1. Panneau indicateur lumineux comprenant un corps lumineux qui comporte au moins une surface d'émergence de lumière, qui émet la lumière et qui est divisée en surfaces partielles émettant dans des couleurs différentes, et comprenant un ensemble de sources lumineuses injectant la lumière dans le corps lumineux, le corps lumineux comportant un ensemble de plaques conductrices de lumière ou un ensemble de corps creux avec des parois de délimitation, dans lequel le corps lumineux est composé de plaques conductrices de lumière (2, 4) ou de corps creux (13, 14) superposés, juxtaposés et/ou emboîtés les uns dans les autres, qui comportent différentes surfaces partielles, et dans lequel différentes sources lumineuses (5, 6, 16, 17) sont associées aux plaques conductrices de lumière ou aux corps creux en fonction des surfaces partielles qui émettent dans des couleurs différentes, et injectent une lumière de couleur différente dans chacune des plaques conductrices de lumière ou chacun des corps creux, **caractérisé en ce que**, devant au moins une surface partielle de la surface d'émergence de lumière, est agencé un filtre (3, 15), dont la courbe de transmission spectrale présente un maximum dans le domaine de longueur d'onde d'émission de lumière de la source lumineuse concernée et, dans le reste, a un tel comportement de réflexion et d'absorption que, dans le cas d'une injection de lumière blanche extérieure, le domaine de couleur de la lumière émise est maintenue.

2. Panneau indicateur lumineux selon la revendication 1, **caractérisé en ce que** la surface d'émergence de lumière est divisée en surfaces partielles (H1.1, H1.2, H2) avec une première couleur et une deuxième couleur, le corps lumineux comportant au moins deux plaques conductrices de lumière (2, 4) superposées qui sont irradiées chacune par des sources lumineuses (5, 6) de couleurs différentes, dans lequel la surface partielle de la deuxième couleur est retirée dans la plaque conductrice de lumière (4) de la surface partielle de la première couleur, et la surface partielle de la première couleur est retirée ou est transparente dans la plaque conductrice de lumière (2) de la surface partielle de la deuxième couleur, ou dans lequel la plaque conductrice de lumière (4) de la surface partielle de la première couleur émet sur toute la surface et la plaque conductrice de lumière (2) de la surface partielle de la deuxième couleur ne laisse pas passer la lumière vers un côté dans le domaine de la surface partielle de la deuxième couleur.

3. Panneau indicateur lumineux selon la revendication 1, **caractérisé en ce que** chaque corps creux (13, 14) est délimité par un couvercle (11) translucide, des parois latérales (22) et une paroi faisant face au couvercle translucide, et **en ce que** la surface émettant la lumière de chaque corps creux a le contour de chaque surface partielle concernée.

4. Panneau indicateur lumineux selon la revendication 3, **caractérisé en ce que** les corps creux comportent au moins en partie des parois de délimitation communes.

5. Panneau indicateur lumineux selon l'une quelconque des revendications 1 à 4, **caractérisé en ce que** les parois de délimitation ne faisant pas office de surface d'émergence de lumière du corps lumineux, des plaques conductrices de lumière (2, 4) et/ou des corps creux (13, 14), sont munies, au moins en partie, de surfaces de réception de lumière pour le rayonnement émis par les sources lumineuses (5, 6, 16, 17, 20, 21) et, pour le reste, ont un comportement de réflexion élevée pour la lumière reçue à partir du corps lumineux, et **en ce que** les surfaces émettant la lumière des sources lumineuses et les surfaces de réception de lumière des parois de délimitation sont ajustées les unes aux autres de telle sorte que sensiblement la totalité de la lumière émise parvient dans le corps lumineux.

6. Panneau indicateur lumineux selon l'une quelconque des revendications 1 à 5, **caractérisé en ce que** les sources lumineuses sont conçues sous la forme d'une pluralité de diodes luminescentes et/ou de tubes fluorescents, de préférence de petit diamètre.

7. Panneau indicateur lumineux selon l'une quelconque des revendications 1 à 6, **caractérisé en ce que** la surface d'émergence de lumière du corps lumineux est composée d'au moins une surface partielle émettant en couleur verte et d'au moins une surface partielle émettant en couleur blanche ou en couleur de contraste, lesquelles, combinées, représentent un panneau de secours, et **en ce que** la source lumineuse injectant la lumière verte dans le corps lumineux comporte de préférence un domaine de longueur d'onde concentré entre 595 et 535 mm.

8. Panneau indicateur lumineux selon l'une quelconque des revendications 1 à 6, **caractérisé en ce que** les plaques conductrices de lumière ou les corps creux émettant de la lumière de couleurs différentes sont séparés optiquement les uns des autres.

9. Panneau indicateur lumineux selon l'une quelconque des revendications 1 à 8, **caractérisé en ce que**, sur le corps lumineux, il est prévu au moins un support (12) portant les sources lumineuses, lequel comporte les lignes électriques destinées à alimenter les sources lumineuses et lequel forme au moins une paroi de délimitation du corps lumineux ou est agencé sur une surface de délimitation munie des surfaces de réception de la lumière.

Fig. 1

Fig. 2

Fig. 3

Fig. 4

2,4

6

9

5

10

8

8

8

8

## Fig. 5a

6

4

3

9

5

2

10

## Fig. 5b

Fig. 6b

Fig. 6a

Fig. 8c

Fig. 8a

Fig. 8b

Fig. 7

Fig. 9a

Fig. 9b

Fig. 9c

Fig. 10